# FASCICULE DE BREVET EUROPEEN

(11) **EP 1 790 211 B1**
(45) Date de publication et mention de la délivrance du brevet: **03.03.2010**
(21) Numéro de dépôt: 06301185.2
(22) Date de dépôt: 27.11.2006
(51) Int. Cl.: A01G 3/04, A01G 17/02

(54) **Pretailleuse incorporant des moyens de contournement des piquets ou analogue**
Vorschneidemaschine mit integrierten Ausweichmitteln für Pfähle oder ähnliches
Pre-pruner including means for getting around stakes and similar elements

(30) Priorité: 28.11.2005 FR 0553616
(43) Date de publication de la demande: 30.05.2007
(73) Titulaire: Tordable SA, F-33190 La Reole (FR)
(72) Inventeur: Tordable, Luis, 33490, Caudrot (FR)
(74) Mandataire: Fantin, Laurent

(56) Documents cités:
- EP-A- 0 312 126
- FR-A- 2 752 360
- FR-A- 2 759 855

## Description

La présente invention se rapporte à une prétailleuse incorporant des moyens pour contourner les piquets ou analogues.

Pour faciliter le travail de la vigne, on peut utiliser une prétailleuse pour couper les sarments après la récolte afin de préparer le travail de la taille.

Une prétailleuse est généralement solidarisée à un engin motorisé tel qu'un tracteur ou un enjambeur par exemple pour se translater le long d'un rang et comprend deux têtes susceptibles d'être disposées de part et d'autre du rang de vigne.

Chaque tête comprend des ensembles de coupe empilés le long d'un axe sensiblement vertical, appelé également axe d'empilage, chaque ensemble de coupe comprenant d'une part une lame circulaire dans un plan sensiblement horizontal (perpendiculaire à l'axe d'empilage), et d'autre part, une cage dans laquelle est disposée la lame, avec en périphérie des échancrures dégageant une partie de la lame.

Des bras sont prévus de part et d'autre des ensembles de coupe, à chaque extrémité de l'axe d'empilage, afin de permettre le mouvement des têtes par rapport au châssis de la prétailleuse, notamment afin de permettre l'écartement des têtes.

Lors de l'opération de prétaillage, les têtes de la prétailleuse sont disposées de part et d'autre du rang et sont légèrement imbriquées l'une dans l'autre.

Afin de ne pas endommager les piquets supportant les fils de palissage et permettre leur passage entre les têtes de la prétailleuse, au moins un actionneur est prévu pour faire pivoter les bras et provoquer l'écartement des têtes. Cet actionneur est également utilisé pour écarter les têtes en bout de rang, pour introduire ou dégager la prétailleuse du rang.

Selon une solution rudimentaire, l'opérateur dispose d'une commande manuelle pour commander les actionneurs et provoquer l'écartement des têtes. Cette solution n'est pas satisfaisante car elle dépend de la dextérité de l'opérateur. De plus, compte tenu de la vitesse de déplacement de la prétailleuse, cette opération peut s'avérer délicate dans la mesure où l'opérateur doit à la fois guider la prétailleuse par rapport au rang et commander l'écartement des têtes.

De plus, la qualité du prétaillage est relativement médiocre car la végétation n'est pas prétaillée avant et après les piquets sur une distance relativement importante.

Afin d'améliorer l'utilisation de la prétailleuse, un dispositif de commande pour déclencher de manière automatique l'écartement des têtes afin d'éviter les piquets a été développé. Ce dernier comprend au moins un capteur de type optique susceptible de détecter les piquets ainsi que des moyens de contrôle susceptibles d'agir sur les actionneurs déclenchant l'écartement des têtes en fonction des renseignements transmis par le ou les capteurs optiques.

Le document EP 0 312 126 A décrit une prétailleuse de ce type.

Toutefois, même avec cet équipement, la qualité du prétaillage est relativement médiocre car l'écartement des têtes a tendance à se déclencher de manière intempestive, le capteur optique et/ou les moyens de contrôle ayant des difficultés à différencier les piquets de la végétation, notamment lorsque cette dernière est relativement dense. De plus, les réglages de cet équipement sont relativement complexes.

Aussi, la présente invention vise à pallier les inconvénients de l'art antérieur en proposant une prétailleuse incorporant des moyens pour contourner les piquets ou autres, permettant d'obtenir une qualité de prétaillage supérieure à celle obtenue avec les prétaillleuses de l'art antérieur. Par ailleurs, les moyens utilisés pour réaliser ce contournement des piquets sont de conception relativement simple et fiable, ce qui permet de réduire les coûts de revient et d'entretien.

A cet effet, l'invention a pour objet une prétailleuse susceptible de se déplacer le long d'un rang d'une culture palissée tel que par exemple la vigne, ledit rang étant susceptible de comprendre des obstacles tels que par exemple des piquets, ladite prétailleuse comprenant un châssis, deux têtes disposées de part et d'autre du rang, des moyens d'articulation intercalés entre au moins une tête et le châssis, au moins un actionneur susceptible d'agir sur les moyens d'articulation de manière à provoquer l'écartement des têtes, ainsi qu'une liaison entre l'actionneur et les moyens d'articulation qui autorise un léger mouvement d'écartement des têtes sans que l'actionneur soit actionné lorsqu'au moins une desdites têtes vient en contact avec un obstacle ainsi que des moyens de rappel qui tendent à rapprocher les têtes l'une vers l'autre, caractérisée en ce qu'elle comprend des moyens pour détecter ledit léger mouvement d'écartement des têtes ainsi que des moyens de contrôle susceptibles de commander l'actionneur pour provoquer l'écartement des têtes afin de permettre le passage de l'obstacle entre lesdites têtes.

Cet agencement permet de réduire l'effort exercé par les têtes sur l'obstacle lors du contournement.

D'autres caractéristiques et avantages ressortiront de la description qui va suivre de l'invention, description donnée à titre d'exemple uniquement, en regard des dessins annexés sur lesquels :
- la figure 1 est une vue en perspective illustrant de manière schématique une prétailleuse au niveau d'un rang d'une culture palissée,
- la figure 2 est une vue de dessus illustrant en trait fort une prétailleuse au niveau d'un rang entre deux piquets, et en trait mixte une prétailleuse au niveau d'un rang au droit d'un piquet,
- la figure 3A est une vue de dessus d'une prétailleuse selon une première variante de l'invention en position de travail entre deux piquets,
- les figures 3B et 3C sont des vues de dessus de la prétailleuse de la figure 3A à différents moments du passage d'un piquet entre les têtes,
- la figure 4A est une vue de dessus d'une prétailleuse selon une autre variante de l'invention en position de travail entre deux piquets,
- la figure 4B est une vue de dessus de la prétailleuse de la figure 4A au moment de la détection d'un piquet,
- la figure 4C est une vue de dessus de la prétailleuse de la figure 4A avec des têtes écartées pour permettre le passage d'un piquet,
- la figure 5A est une vue latérale illustrant la liaison entre un actionneur susceptible de provoquer l'écartement des têtes et les moyens d'articulation desdites têtes lorsque la prétailleuse est en position de travail,
- la figure 5B est une vue latérale illustrant la liaison entre un actionneur susceptible de provoquer l'écartement des têtes et les moyens d'articulation desdites têtes lorsque la prétailleuse détecte un piquet,
- la figure 5C est une vue latérale illustrant la liaison entre un actionneur susceptible de provoquer l'écartement des têtes et les moyens d'articulation desdites têtes lorsque la prétailleuse est au droit d'un piquet et le contourne,
- la figure 6A est une coupe illustrant en détails les moyens 48 de détection selon un mode de réalisation lorsque les têtes sont en position de travail entre deux piquets, et
- la figure 6B est une coupe illustrant en détails les moyens 48 de détection de la figure 6A lorsque l'une desdites têtes vient en contact avec un piquet.

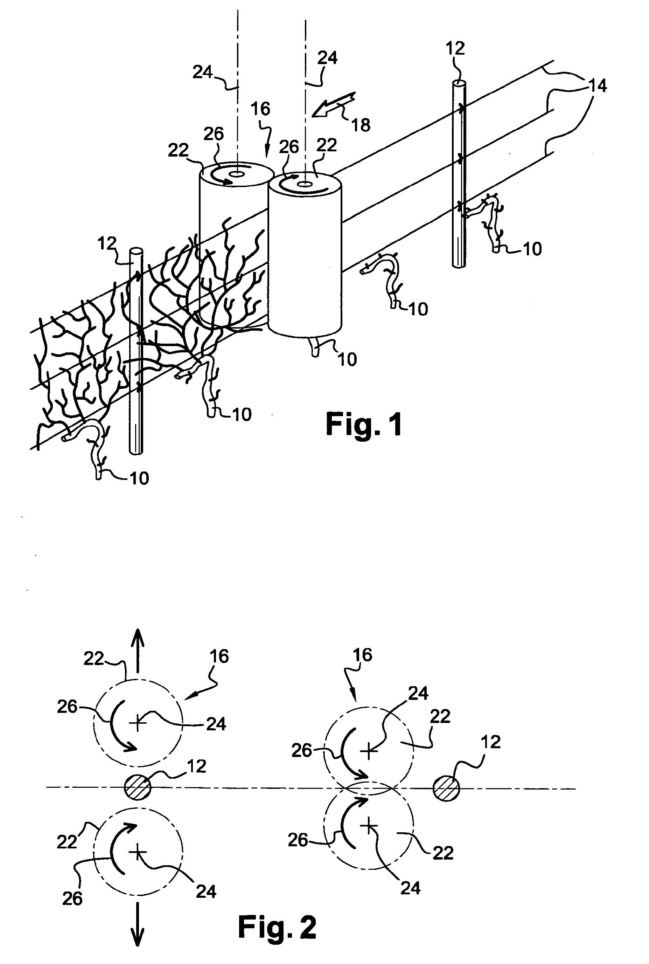

Sur la figure 1, on a représenté un rang de vigne le long duquel sont répartis des pieds de vigne 10, des piquets 12 supportant des fils de palissage 14. Après la récolte, les rameaux de l'année appelés également sarments sont généralement enchevêtrés entre eux et aux fils de palissage. Afin de faciliter la taille, il est possible d'opérer un prétaillage mécanique afin de couper une majorité des sarments et de ne laisser que quelques bouts de sarments à proximité des pieds qui sont ultérieurement taillés. Cette opération de prétaillage permet un gain de temps et facilite le travail de la taille.

Bien que décrite appliquée à la culture de la vigne, la présente invention peut s'appliquer à toutes les cultures palissées pour lesquelles une opération de prétaillage mécanique peut être réalisée.

Pour réaliser cette opération de prétaillage, on utilise une prétailleuse 16, illustrée de manière schématique sur la figure 1, susceptible de se translater le long du rang selon la direction référencée par la flèche 18. A cet effet, la prétailleuse 16 est généralement solidarisée à un engin motorisé tel qu'un tracteur ou un enjambeur par exemple. La liaison entre la prétailleuse et l'engin motorisée n'est pas plus détaillée car elle est connue de l'homme du métier.

Une prétailleuse comprend généralement un châssis 20 et deux têtes 22 disposées de part et d'autre du rang. Selon un mode de réalisation, chaque tête 22 comprend des ensembles de coupe empilés le long d'un axe 24 sensiblement vertical, appelé également axe d'empilage, chaque ensemble de coupe comprenant d'une part une lame circulaire dans un plan sensiblement horizontal (perpendiculaire à l'axe d'empilage), et d'autre part, une cage dans laquelle est disposée la lame, avec en périphérie des échancrures dégageant une partie de la lame. Pour chaque tête, les lames et les cages ont un mouvement de rotation relatif de manière à obtenir la coupe des rameaux, ladite rotation étant référencée 26.

Tous ces éléments ne sont pas plus détaillés car ils sont connus de l'homme du métier. Sur l'ensemble des figures, une tête 22 est représentée sous forme d'un cylindre ayant pour axe l'axe d'empilage 24, la paroi périphérique correspondant aux parois périphériques des cages des ensembles de coupe.

Comme illustré sur les figures 1 et 2, les têtes 22 sont disposées de part d'autre du rang et sont en position de travail entre deux piquets légèrement imbriquées l'une dans l'autre afin d'exercer un effort sur la végétation.

Comme illustré sur la figure 2, au droit d'un piquet 12, les têtes 22 sont en position écartée de manière à permettre audit piquet 12 de passer entre les deux têtes 22.

Pour la présente demande, on entend par piquet 12, un élément ou un obstacle de toute nature, placé au niveau des rangs, utilisé notamment pour supporter des fils de palissage.

Pour permettre l'écartement d'au moins une tête, des moyens d'articulation 28 sont intercalés entre au moins une tête 22 et le châssis 20 de la prétailleuse et de préférence entre chaque tête 22 et le châssis 20 ainsi qu'au moins un actionneur 30 relié au châssis 20, pour agir sur les moyens d'articulation 28 et provoquer l'écartement des têtes.

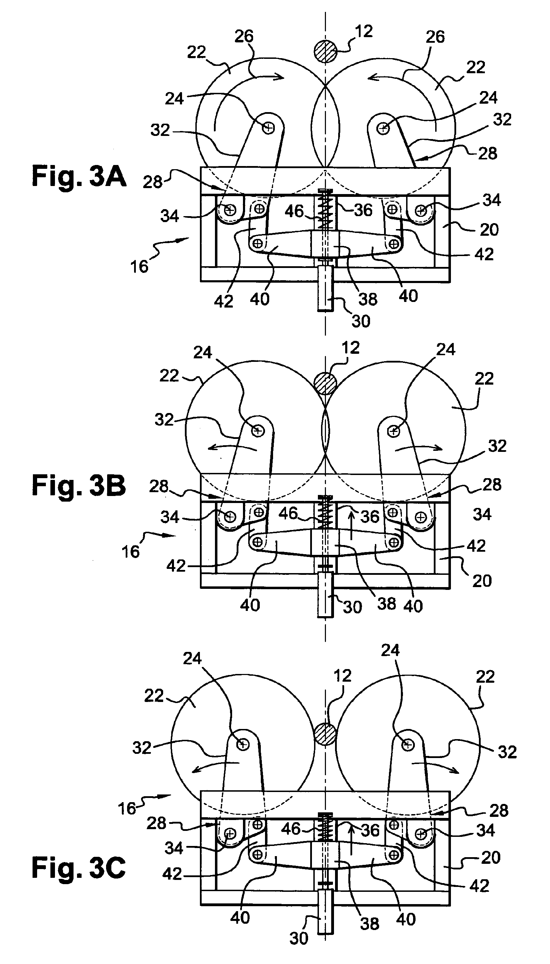

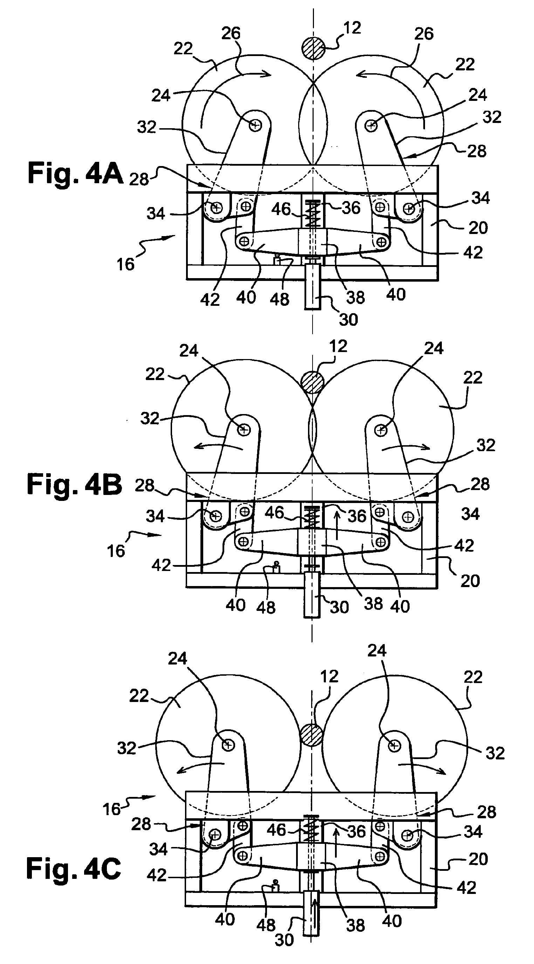

Selon un mode de réalisation, illustré sur les figures 3A à 3C et 4A à 4C, les moyens d'articulation 28 comprennent pour chaque tête, au moins un bras 32, et de préférence deux, un à chaque extrémité de l'axe d'empilage 24, ledit bras 32 étant susceptible de pivoter selon un axe 34 sensiblement vertical relié au châssis 20 à une de ses extrémités et étant relié à l'axe d'empilage 24 à l'autre extrémité. Ainsi, chaque bras peut pivoter dans un plan sensiblement horizontal, perpendiculaire à l'axe d'empilage 24.

Avantageusement, la prétailleuse comprend un seul actionneur 30 relié à chaque bras 32. En variante, on peut envisager deux actionneurs 30, un pour chaque bras 32. La solution ne nécessitant qu'un actionneur permet d'obtenir un coût de revient inférieur.

Selon un mode de réalisation, la prétailleuse comprend une glissière 36 solidaire du châssis 20, sensiblement horizontale, orientée de préférence sensiblement parallèle au rang et disposée au milieu des axes 34 de pivotement des bras, un coulisseau 38 susceptible de coulisser le long de la glissière 36 avec de part et d'autre des ailes 40 chacune reliée par l'intermédiaire d'une biellette 42 aux bras 32. Ainsi, en se translatant, le coulisseau 38 provoque le mouvement de pivotement des bras 32 et donc l'écartement ou le rapprochement des têtes 22.

Selon l'exemple illustré sur les figures 3A à 3C et 4A à 4C, lorsque le coulisseau 38 se translate vers une première extrémité de la glissière (vers le haut sur les figures) cela provoque l'écartement des têtes 22 alors que lorsqu'il se translate vers la seconde extrémité de la glissière (vers le bas sur les figures) cela provoque le rapprochement des têtes 22.

Selon une variante simplifiée de l'invention représentée sur les figures 3A à 3C, la prétailleuse comprend des moyens pour contourner les piquets. Selon l'invention, la prétailleuse comprend une liaison 44 entre l'actionneur 30 et les moyens d'articulation 28 qui autorise un léger mouvement d'écartement des têtes 22 sans que l'actionneur soit actionné lorsqu'au moins une desdites têtes vient en contact avec un piquet ainsi que des moyens de rappel 46 qui tendent à rapprocher les têtes l'une vers l'autre à l'encontre de l'effort exercé notamment par le piquet.

Les moyens de rappel 46 se présentent sous la forme d'un ressort de compression dont la course de compression est suffisante pour permettre un déplacement adéquat des têtes de manière à permettre aux piquets de passer entre les têtes.

En position de travail entre deux piquets, les têtes sont tangentes ou de préférence imbriquées l'une dans l'autre afin d'exercer un effort sur la végétation. Lors du passage du piquet entre les têtes, lesdites têtes s'écartent de manière à autoriser le passage du piquet, comme illustré sur les figures 3B et 3C grâce à l'écrasement des moyens de rappel 46 et au mouvement relatif possible entre les moyens d'articulation et l'actionneur.

Les têtes étant en contact avec les piquets, le prétaillage est réalisé juste avant et après chaque piquet ce qui contribue à améliorer la qualité du prétaillage.

Selon une autre variante illustrée sur les figures 4A à 4C, pour réduire l'effort de pression exercé par les têtes sur les piquets lors du contournement, la prétailleuse comprend également des moyens 48 pour détecter le léger mouvement d'écartement des têtes 22 lorsqu'au moins une desdites têtes vient en contact avec un piquet ainsi que des moyens de contrôle susceptibles de commander l'actionneur 30 pour provoquer l'écartement des têtes 22, de préférence pendant une durée t prédéterminée, afin de permettre le passage d'un piquet 12 entre lesdites têtes.

Selon un mode de réalisation, l'actionneur 30 se présente sous la forme d'un vérin avec une tige 50 passant par un orifice 52 ménagé au niveau du coulisseau 38, ladite tige comprenant une butée 54 susceptible de prendre appui contre le coulisseau 38, la butée 54 étant disposée par rapport au coulisseau de manière à le pousser vers la première extrémité et provoquer l'écartement des têtes lorsque la tige 50 du vérin se translate, les moyens de rappel 46 tendant à maintenir le coulisseau 38 contre la butée 54.

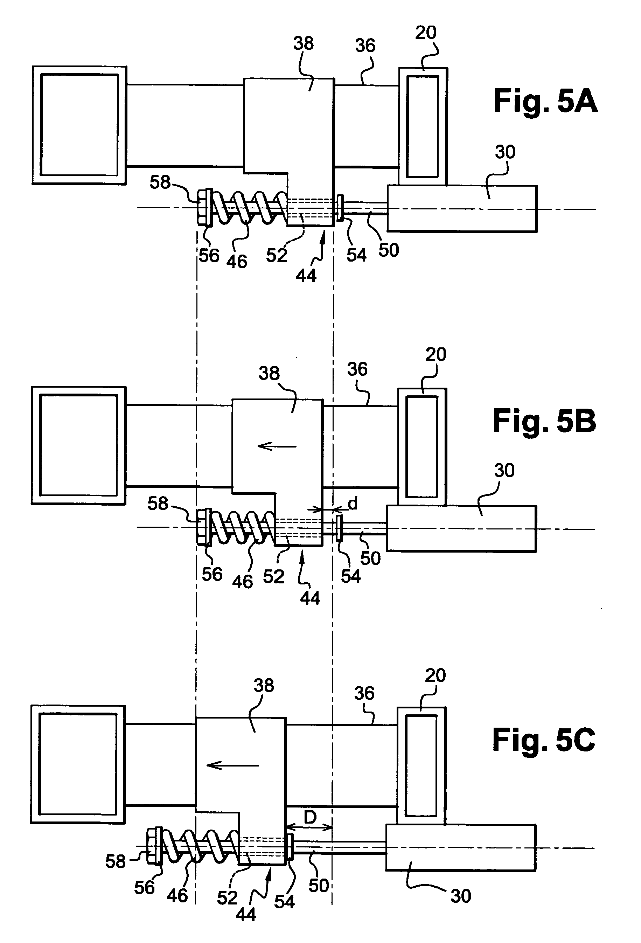

Comme illustré sur les figures 5A à 5C, le vérin 30 est solidaire du châssis 20 et placé au niveau de la seconde extrémité de la glissière 36, le mouvement de sortie de la tige 50 du vérin étant dirigé vers la première extrémité de la glissière. La tige 50 passe à travers l'orifice 52 ménagé dans le coulisseau 38. La butée 54 est disposée entre le corps du vérin et le coulisseau 38.

Les moyens de rappel 46 se présentent sous la forme d'un ressort de compression intercalé entre une butée 56 prévue à l'extrémité de la tige 50 et le coulisseau 38.

La course du vérin D ainsi que la position de la butée 54 sont déterminées de manière à ce que lorsque le vérin est à l'état repos, le coulisseau 38 est en appui contre la butée 54 et les têtes 22 sont en position de travail, comme illustré sur la figure 4A, et lorsque le vérin est en position actionné, la butée 54 pousse le coulisseau 38 qui se translate et provoque l'écartement des têtes 22 d'une distance suffisante pour permettre le passage des piquets, comme illustré sur la figure 4C. De préférence, la distance séparant les têtes lorsque le vérin est actionné est inférieure à la dimension de l'obstacle de manière à ce que les têtes soient toujours en contact avec l'obstacle à contourner ce qui contribue à améliorer la qualité du prétaillage.

Cette variante illustrée sur les figures 4A à 4C permet de réduire la pression exercée par les têtes sur les piquets ce qui permet de limiter les risques d'endommagement du palissage.

Selon une autre caractéristique de l'invention, les moyens 48 de détection permettent de détecter le mouvement d'écartement des têtes. Lesdits moyens 48 de détection peuvent être disposés à différents endroits au niveau de la chaîne cinématique intercalée entre l'actionneur 30 et une tête 22. Selon un mode de réalisation, les moyens 48 de détection sont placés au niveau du coulisseau 38 et permettent de détecter les mouvements dudit coulisseau.

De préférence, les moyens 48 de détection se présentent sous la forme d'un capteur de distance électromagnétique susceptible de détecter lorsque le déplacement du coulisseau 38 ou d'un élément lié audit coulisseau a dépassé une certaine distance.

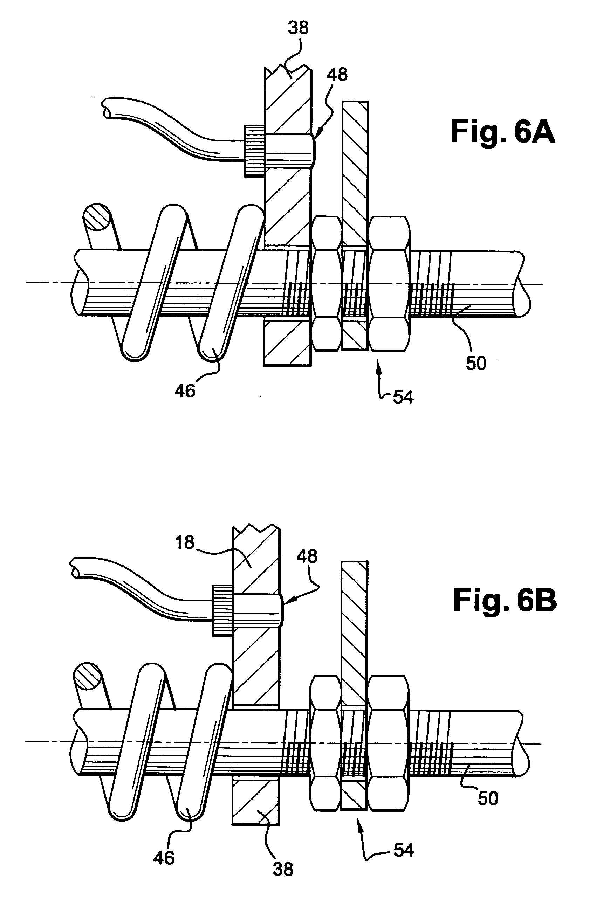

Selon une variante illustrée sur les figures 6A et 6B, le capteur 48 est fixé sur une patte solidaire du coulisseau 38 et la butée 54 comprend une plaque dont une partie est placé en regard du capteur 48 et deux écrous vissés sur la tige 50 de l'actionneur 30 disposés de part et d'autre de ladite plaque. Cette solution permet de régler la position de la butée 54 sur la tige 50 ce qui permet de régler la position des têtes en position de travail entre deux piquets.

Lorsque la butée 54 est en contact avec le coulisseau 38, comme illustré sur la figure 6A, la plaque de la butée 54 est dans le champ du capteur 48. Lorsque le coulisseau 38 se translate et la distance de déplacement dudit coulisseau 38 dépasse un certain seuil d, la plaque de la butée 54 n'est plus disposée dans le champ du capteur 48 qui modifie alors le signal transmis, comme illustré sur la figure 6B. On peut régler le seuil d en ajustant la sensibilité du capteur 48.

Les moyens de contrôle permettent d'une part, de commander l'actionnement du vérin 30 lorsque la distance mesurée par les moyens 48 de détection dépasse un certain seuil d prédéterminé et réglable, et d'autre part, de le maintenir en position actionné pendant une durée t prédéterminée et réglable.

Avantageusement, la durée t pendant laquelle les têtes sont en position écartée est fonction de la vitesse de déplacement de la prétailleuse.

Selon une autre caractéristique de l'invention, la raideur des moyens 46 de rappel est réglable afin d'ajuster la sensibilité du déclenchement de l'écartement des têtes. Selon un mode de réalisation, un écrou 58 peut être prévu au niveau de l'extrémité de la tige de manière à comprimer plus ou moins le ressort 46.

Le fonctionnement de la prétailleuse est maintenant décrit en regard des figures 4A à 4C et 5A à 5C.

En fonctionnement entre deux piquets, les têtes sont légèrement imbriquées l'une dans l'autre, comme illustré sur la figure 4A. L'actionneur est à l'état repos et le coulisseau 38 est en appui contre la butée 54 de l'actionneur, comme illustré sur la figure 5A.

Lorsqu'un piquet ou un obstacle vient en contact avec l'une des têtes, cela tend à provoquer un mouvement d'écartement d'au moins une tête 22, comme illustré sur la figure 4B. Ce léger mouvement d'écartement des têtes 22 est rendu possible car le coulisseau 38 peut se déplacer par rapport à la tige de l'actionneur 30 et tend à comprimer le ressort 46, comme illustré sur la figure 5B. L'effort exercé par le piquet ou l'obstacle doit être suffisant pour provoquer la compression du ressort 46 et déplacer le coulisseau 38. A contrario, l'effort exercé par la végétation n'est pas suffisant pour provoquer la compression du ressort et le déplacement du coulisseau 38. Ainsi, l'écartement des têtes n'est pas déclenché de manière intempestive. En fonction de la végétation, la raideur du ressort 46 peut être réglée afin de faire varier la sensibilité du déclenchement de l'écartement des têtes.

Lorsque le piquet ou l'obstacle provoque un léger écartement des têtes, les moyens 48 détectent ce mouvement et renseignent les moyens de contrôle qui commandent l'actionneur 30 et la sortie de la tige 50. Comme illustré sur la figure 5C, la butée 54 pousse le coulisseau 38, ce qui provoque l'écartement des têtes comme illustré sur la figure 4C.

De préférence, la tige de l'actionneur se translate d'une distance telle que la distance séparant les têtes est inférieure aux dimensions de l'obstacle afin de garder le contact avec l'obstacle et de prétailler juste avant et après l'obstacle. L'écartement des têtes permet simplement de réduire l'effort exercé par les têtes sur l'obstacle lors du contournement dudit obstacle.

Selon une première variante de fonctionnement, la course de la tige du vérin est fixe et indépendante des dimensions de l'obstacle contourné.

Selon une autre variante de fonctionnement, la course du vérin peut être ajustée en fonction des dimensions de l'obstacle à contourner de manière à obtenir un effort constant sur l'obstacle, de préférence réduit pour ne pas l'endommager, quelles que soient les dimensions dudit obstacle. Selon cette variante, la tige de l'actionneur sort tant que le capteur 48 ne détecte pas que le coulisseau 38 et la butée 54 sont séparées d'une distance inférieure au seuil d prédéterminé.

Pour ces deux variantes de fonctionnement, l'actionneur est maintenu dans cette position sortie pendant une durée t prédéterminée afin de laisser passer le piquet ou l'obstacle entre les têtes. A l'issue de cette durée, l'actionneur 30 revient en position repos et le ressort tend à déplacer le coulisseau 38 contre la butée 54 ce qui provoque le rapprochement des têtes 22 qui reviennent en position de travail, légèrement imbriquées l'une dans l'autre, comme illustré sur la figure 4A.

Bien entendu, l'invention n'est évidemment pas limitée au mode de réalisation représenté et décrit ci-dessus, mais en couvre au contraire toutes les variantes, notamment en ce qui concerne les formes, les dimensions et les matériaux des différents éléments de la prétailleuse.

## Revendications

1. Prétailleuse susceptible de se déplacer le long d'un rang d'une culture palissée tel que par exemple la vigne, ledit rang étant susceptible de comprendre des obstacles (12) tels que par exemple des piquets, ladite prétailleuse comprenant un châssis (20), deux têtes (22) disposées de part et d'autre du rang, des moyens d'articulation (28) intercalés entre au moins une tête (22) et le châssis (20), au moins un actionneur (30) susceptible d'agir sur les moyens d'articulation (28) de manière à provoquer l'écartement des têtes (22), ainsi qu'une liaison (44) entre l'actionneur (30) et les moyens d'articulation (28) qui autorise un léger mouvement d'écartement des têtes (22) sans que l'actionneur soit actionné lorsqu'au moins une desdites têtes (22) vient en contact avec un obstacle (12) ainsi que des moyens de rappel (46) qui tendent a rapprocher les têtes l'une vers l'autre, **caractérisée en ce qu'**elle comprend des moyens (48) pour détecter ledit léger mouvement d'écartement des têtes (22) ainsi que des moyens de contrôle susceptibles de commander l'actionneur (30) pour provoquer l' écartement des têtes (22) afin de permettre le passage de l'obstacle (12) entre lesdites têtes.

2. Prétailleuse selon la revendication 1, **caractérisée en ce qu'**elle comprend des moyens d'articulation (28) entre chaque tête (22) et le châssis (20).

3. Prétailleuse selon la revendication 1 ou 2, **caractérisée en ce qu'**elle comprend, au moins un bras (32) susceptible de pivoter selon un axe (34) sensiblement vertical relié au châssis (20) à une de ses extrémités et relié à une tête (22) à l'autre extrémité ainsi qu'une glissière (36) solidaire du châssis (20), un coulisseau (38) susceptible de coulisser le long de la glissière (36) avec de part et d'autre des ailes (40) reliées par l'intermédiaire d'une biellette (42) aux bras (32).

4. Prétailleuse selon la revendication 3, **caractérisée en ce que** l'actionneur (30) se présente sous la forme d'un vérin avec une tige (50) passant par un orifice (52) ménagé au niveau du coulisseau (38), ladite tige comprenant une butée (54), immobile par rapport à la tige, susceptible de prendre appui contre le coulisseau (38), la butée 54 étant disposée par rapport au coulisseau de manière à le pousser et provoquer l'écartement des têtes lorsque la tige (50) du vérin se translate, les moyens de rappel (46) tendant à maintenir le coulisseau (38) contre la butée (54).

5. Prétailleuse selon la revendication 4, **caractérisée en ce que** la course du vérin D et la position de la butée (54) sont déterminées de manière à ce que lorsque le vérin est à l'état repos, le coulisseau (38) est en appui contre la butée (54) et les têtes (22) sont en position de travail et lorsque le vérin est en position actionné, la butée (54) pousse le coulisseau (38) qui se translate et provoque l'écartement des têtes (22) d'une distance suffisante pour permettre le passage des piquets.

6. Prétailleuse selon l'une quelconque des revendications précédentes, **caractérisée en ce que** les moyens (48) de détection se présentent sous la forme d'un capteur susceptible de déterminer si la distance de déplacement des têtes (12) a dépassé un certain seuil.

7. Prétailleuse selon l'une quelconque des revendications précédentes, **caractérisée en ce que** les moyens de contrôle permettent d'une part, de commander l'actionneur (30) lorsque la distance de déplacement des têtes dépasse un certain seuil prédéterminé, et d'autre part, de le maintenir en position actionnée pendant une durée t prédéterminée.

8. Prétailleuse selon l'une quelconque des revendications précédentes, **caractérisée en ce que** la raideur des moyens (46) de rappel est réglable afin d'ajuster la sensibilité du déclenchement de l'écartement des têtes.

## Claims

1. A pre-pruner able to move along a row in a trained crop such as for example a vine, said row being liable to include obstacles (12) such as for example stakes, said pre-pruner including a chassis (20), two heads (22) disposed on either side of the row, articulation means (28) interposed between at least one head (22) and the chassis (20), at least one actuator (30) able to act on the articulation means (28) so as to cause the separation of the heads (22), as well as a connection (44) between the actuator (30) and the articulation means (28) that allows a slight separation movement of the heads (22) without the actuator being actuated when at least one of said heads (22) comes into contact with an obstacle (12), and return means (46) that tend to move the heads one towards the other, **characterised in that** it comprises means (48) for detecting said slight separation movement of the heads (22) and control means able to control the actuator (30) so as to cause the separation of the heads (22) in order to enable the obstacle (12) to pass between said heads.

2. A pre-pruner according to claim 1, **characterised in that** it includes articulation means (28) between each head (22) and the chassis (20).

3. A pre-pruner according to claim 1 or 2, **characterised in that** it includes at least one arm (32) able to pivot on a substantially vertical shaft (34) connected to the chassis (20) at one of its ends and connected to a head (22) at the other end as well as a runner (36) secured to the chassis (20), a slider (38) able to slide along the runner (36) with, on each side, wings (40) connected by means of a link (42) to the arms (32).

4. A pre-pruner according to claim 3, **characterised in that** the actuator (30) is in the form of a cylinder with a rod (50) passing through an orifice (52) provided at the slider (38), said rod comprising a stop (54), immobile with respect to the rod, able to bear against the slider (38), the stop (54) being disposed with respect to the slider so as to push it and cause the separation of the heads when the rod (50) of the cylinder translates, the return means (46) tending to hold the slider (38) against the stop (54).

5. A pre-pruner according to claim 4, **characterised in that** the travel of the cylinder D and the position of the stop (54) are determined so that, when the cylinder is in the idle state, the slider (38) is in abutment against the stop (54) and the heads (22) are in the working position and, when the cylinder is in the actuated position, the stop (54) pushes the slider (38), which translates and causes the separation of the heads (22) by a sufficient distance to I enable the stakes to pass.

6. A pre-pruner according to any one of the preceding claims, **characterised in that** the detection means (48) are in the form of a sensor able to determine whether the movement distance of the heads (12) has exceeded a certain threshold.

7. A pre-pruner according to any one of the preceding claims, **characterised in that** the control means make it possible on the one hand to control the actuator (30) when the movement distance of the heads exceeds a certain predetermined threshold and on the other hand to maintain it in the actuated position for a predetermined period.

8. A pre-pruner according to any one of the preceding claims, **characterised in that** the stiffness of the return means (46) is adjustable in order to adjust the sensitivity of the triggering of the separation of the heads.

## Patentansprüche

1. Vorschneider, der geeignet ist, sich entlang einer Reihe einer Spalierkultur, wie beispielsweise Weinstöcken zu bewegen, wobei die Reihe Hindernisse (12), wie zum Beispiel Pfosten aufweisen kann, wobei der Vorschneider folgendes umfasst, nämlich ein Gestell (20), zwei Köpfe (22), die auf der einen und der anderen Seite der Reihe angeordnet sind, Gelenkmittel (28), die zwischen wenigstens einem Kopf (22) und dem Gestell (20) angeordnet sind, wenigstens ein Betätigungsglied (30), das geeignet ist, auf die Gelenkmittel (28) derart einzuwirken, dass das Spreizen der Köpfe (22) bewirkt wird, sowie eine Verbindung (44) zwischen dem Betätigungsglied (30) und den Gelenkmitteln (28), die eine leichte Spreizbewegung der Köpfe (22) zulässt, ohne dass das Betätigungsglied betätigt wird, wenn wenigstens einer der Köpfe (22) mit einem Hindernis (12) in Kontakt gelangt, sowie Rückstellmittel (46), die bestrebt sind, die Köpfe einander zu nähern, **dadurch gekennzeichnet, dass** er Mittel (48) umfasst, um die leichte Spreizbewegung der Köpfe (22) zu erfassen, sowie Steuermittel, die geeignet sind, das Betätigungsglied (30) zu steuern, um das Spreizen der Köpfe (22) zu bewirken, um so den Durchgang des Hindernisses (12) zwischen den Köpfen zu ermöglichen.

2. Vorschneider nach Anspruch 1, **dadurch gekennzeichnet, dass** er Gelenkmittel (28) zwischen jedem Kopf (22) und dem Gestell (20) aufweist.

3. Vorschneider nach Anspruch 1 oder 2, **dadurch gekennzeichnet, dass** er folgendes umfasst, nämlich wenigstens einen Arm (32) der geeignet ist, an einem seiner Enden um eine im Wesentlichen vertikale, mit dem Gestell (20) verbundene Achse (34) zu verschwenken und der am anderen Ende mit einem Kopf (22) verbunden ist, sowie eine mit dem Gestell (20) fest verbundene Gleitschiene (36), einen Schieber (38), der geeignet ist, entlang der Gleitschiene (36) zu gleiten und auf beiden Seiten Flügel (40) besitzt, die mittels eines Schwingarms (42) mit den Armen (32) verbunden sind.

4. Vorschneider nach Anspruch 3, **dadurch gekennzeichnet, dass** das Betätigungsglied (30) in Form eines Zylinders mit einer Stange (50), die eine im Bereich des Schiebers (38) ausgebildete Öffnung (52) durchgreift, vorliegt, wobei die Stange einen gegenüber der Stange unbeweglichen Anschlag (54) aufweist, der geeignet ist, sich an den Schieber (38) anzulegen, wobei der Anschlag (54) gegenüber dem Schieber derart angeordnet ist, dass er diesen schiebt und das Spreizen der Köpfe bewirkt, wenn sich die Stange (50) des Zylinders verschiebt, wobei die Rückstellmittel (46) bestrebt sind, dein Schieber (38) an dem Anschlag (54) zu halten.

5. Vorschneider nach Anspruch 4, **dadurch gekennzeichnet, dass** der Zylinderhub D sowie die Position des Anschlags (54) derart festgelegt sind, dass dann, wenn der Zylinder sich in Ruhestellung befindet, der Schieber (38) an dem Anschlag (54) anliegt und die Köpfe (22) in Arbeitsstellung sind, und dass dann, wenn der Zylinder sich in betätigter Position befindet, der Anschlag (54) den Schieber (38) schiebt, der sich verschiebt und das Spreizen der Köpfe (22) um einen ausreichenden Abstand zum Ermöglichen des Durchgangs der Pfosten bewirkt.

6. Vorschneider nach einem der vorhergehenden Ansprüche, **dadurch gekennzeichnet, dass** die Erfassungsmittel (48) in Form eines Sensors vorliegen, der geeignet ist, zu bestimmen, ob der Bewegungsabstand der Köpfe (12) eine gewisse Schwelle überschritten hat.

7. Vorschneider nach einem der vorhergehenden Ansprüche, **dadurch gekennzeichnet, dass** die Steuermittel einerseits ermöglichen, das Betätigungsglied (30) zu steuern, wenn der Bewegungsabstand der Köpfe eine gewisse vorbestimmte Schwelle überschreitet, und andererseits ermöglichen, dieses während einer vorbestimmten Zeitdauer t in betätigter Position zu halten.

8. Vorschneider nach einem der vorhergehenden Ansprüche, **dadurch gekennzeichnet, dass** die Steifigkeit der Rückstellmittel (48) einstellbar ist, um die Empfindlichkeit der Auslösung des Spreizens der Köpfe einzustellen.
